# EUROPEAN PATENT APPLICATION

(11) **EP 2 130 434 A2**
(43) Date of publication of application: **09.12.2009**
(21) Application number: 08160514.9
(22) Date of filing: 16.07.2008
(51) Int. Cl.: A01N 27/00, A01N 33/12, D21H 21/36, A01N 35/08, A01N 43/80, A01P 1/00

(54) **Biocidal and dispersing composition and use thereof in a method for controlling the biological contamination and the formation of deposits in a system for the production of paper and/or of wood pulp**

(30) Priority: 16.04.2008 IT MI20080696
(71) Applicant: Acquaflex S.r.l., 20010 Cornaredo (IT)
(72) Inventor: Bratus, Riccardo, 20142, MILANO (IT); Baggio, Verbena, 21052, BUSTO ARSIZIO (VA) (IT)
(74) Representative: Mittler, Enrico

(57) **Abstract**

A method for controlling the biological contamination and the formation of sticky deposits in the waters of a system for the production of paper and/or of the wood pulp, wherein said method includes the step of adding a biocidal and dispersing composition in at least one damp area of said system.

## Description

The present invention relates to a biocidal and dispersing composition and to the use thereof in a method for controlling the biological contamination and the formation of deposits in a system for the production of paper and/or of wood pulp.

Specifically, the present invention relates to a method for controlling the biological contamination and the formation of sticky deposits in paper mill waters and/or in waters for the production of wood pulp and to a biocidal and dispersing composition suitable for such a method.

It is known that the base products for the production of paper are vegetal, such as coniferous and non-coniferous trees, remains of annual plants such as graminaceous plants and remains of textile fibres named linters or long fibre remains. Recovered products such as paper and cartons are also used.

The product for the production of paper is cellulose obtained especially from timber trees.

It is also known that the first operation related to paper manufacturing is fibre pulping that takes place in pulpers. Celluloses are then refined in refiners and the fibres (refined cellulose, wood pulp, recovered fibres, etc.) are conveyed into the mixing chest where charges and additives such as sizes, optical dyes and bleachings are added.

From here the pulp flows to the machine chest. Up to this point, the concentration of the slurry is high and generally never below 3.5-4.0%. The slurry must be diluted for the following steps of the process. This takes place in a large capacity fan pump, in which the slurry is diluted from 1.0% to 0.4% as a function of the grammage and of the kind of paper to be obtained.

The dilution is carried out by employing the manufacturing cycle waters from the drainage on screen (so-called white waters or underscreen waters). The diluted slurry now passes to purification that serves to separate the heaviest impurities exploiting centrifugal action.

The purification is mainly carried out in vortex cleaners and in centriscreens. The purification product is conveyed to the headbox that serves to feed the slurry onto the formation screen or into the formation cylinder (also designated as drum). 70-97% of the water is drained from the slurry drawn by the screen. The drainage is aided by the pressure generated by the presence of rollers and foils placed under the screen and by the vacuum cassettes. A vacuum cylinder finally extracts other water from the sheet. After the step with the vacuum cylinder, the sheet passes from the screen to a system of damp presses which press the sheet between felts in order to squeeze a part of the remaining water and compress the sheet.

The screen released from the sheet goes back, sliding in the part under the continuous machine and is cleaned from fibres and deposits by means of splashes of water and returns up to receive new slurry.

After the step with damp presses, the sheet enters the dryer section. The latter consists of many cylinders (or of one large cylinder named Yankee cylinder in the case of tissue paper), within which pressurised vapour is conveyed. Finally, after a possible smoothing and pressing, the sheet is rolled on a reel.

A part of the water of the underscreen is conveyed into the flotation units or in the settlers in which the slurry left in the water after the process of formation on screen of the sheet is separated. The recovered water, designated as clarified water, is collected in the clarified water chests and used for the dilution of the slurry.

It is also known that the operations related to the processing of wood initially consist of debarking and defibering. The fibrous suspension obtained from defibering is filtered by means of vibrating perforated plates designated as vibrating screens. The product continues on the main line whereas the material that is retained in the basket contributes to increase the waste line. At this point, the product must pass a further step of centrifugal purification, carried out by means of a series of cleaners arranged as a cascade.

The slurry, thickened thereby, is then collected in a chest and conveyed to the various refining stages and subsequently to the bleaching step.

After said bleaching step, the cellulose is repeatedly washed to remove the traces of chemical products employed. At this point, if the paper mill itself has carried out the treatment, the cellulose directly passes to refining, otherwise it is dehydrated and dried, cut into sheets and packaged into rolls.

However, it is known that a broad variety of sticky materials are found in paper mill waters and/or in waters for the production of wood pulp.

These substances come from sources and from different means which also include raw materials used for the production of the paper itself. Indeed, said sticky materials may come from pure wood pulp, from recycled waste paper, as well as from trimmings or production wastes named broke (Back, Allen 2000: "Pitch Control, Wood Resin and deresination," Tappi Press Atlanta, Georgia; Dechandt A., Watkins T. and Pruszynski, P., Apita J. 57(1),13, 2004: "Total approach to deposit control on newsprint machine using, TMP and DIP pulp mix from specialized fixation of individual pulps to retention"). The sticky materials may also come from functional and control additives used in the wood pulp or paper mill and also from chemical products of recycled paper containing lattice (from coated papers (Laubach G.D. 1994: "Innovations in coated broke treatment programs, Proc. Papermakers Conf., 15, Tappi press Atlanta), from adhesives, from waxes and other cast materials, and from elastomers from pressure-sensitive labels. In most cases, a given sample of deposit from the paper production system contains a variety of the above said sticky materials mixed together.

Although there are some typical differences among the kinds of sticky materials found in paper production systems, there are however also some common features. For instance, the components of wood pitch, waxes, antifoam chemical products and pressure sensitive adhesives all tend to be relatively water insoluble. Significant deposition problems typically involve temperatures which exceed the glass transition point of at least one of the components of the existing organic materials. The glass transition point may indeed be defined as the temperature at which a material passes from a glass state to a liquid- or rubber-like state.

Finally, most of the serious problems due to the presence of sticky deposits involve a colloidal destabilisation by means of multivalent cations, by means of charge neutralisation and hydrodynamic shear. The particles indeed may also be collected together by the foam bubbles which rise. The variations in temperature may lead the materials to be more sticky, therefore increasing the possibility of forming deposits.

In addition to the above said sticky deposits, the paper mill waters and/or the wood pulp production waters are also contaminated by organic deposits such as for instance aerobic bacteria, moulds, yeasts, anaerobic bacteria, bacteria belonging to Enterobacteriaceae, E.coli and by inorganic deposits such as for instance iron carbonates, silicates and oxides from such raw materials of the slurry.

The presence of all of the above mentioned deposits is the cause of the formation of defects on paper such as, for instance, holes, breakages, and/or stains and also of the occurrence of bad odours within the system.

Currently, to control the biological contamination within a paper production system, biocidal substances are used such as, for instance, 2,2-dibromo-2-cyanoacetamide (DBNPA), 2-bromo-2-nitropropane-1,3-diol (bronopol) and aliphatic or aromatic quaternary ammonium salts such as, for instance, dialkyl-dimethyl ammonium chloride, alkyl-dimethyl-ammonium chloride and benzalkonium chloride.

Instead, as regards the control of the formation of the sticky deposits disclosed above, different kinds of dispersing agents, among which also compounds belonging to the terpene family, are currently used in the circuits of the systems for the production of paper.

However, there are many difficulties to formulate an aqueous composition that contains both a terpenic dispersing compound and more than one biocidal compound due to the insolubility of terpenes in water and to the reciprocal incompatibility between different biocidal substances.

Therefore, the need is still deeply felt to find a method allowing to control both the biological contamination and the formation of sticky deposits present in the waters of a system for the production of paper and/or of wood pulp using only one stable aqueous composition that is at the same time biocidal and dispersing for the above mentioned compounds.

It has now surprisingly been discovered that the presence of a biocide belonging to specific compounds of the ammonium alkyl family of the general formula R-N(CH₃)₃⁺Cl⁻ allows to overcome the above said drawbacks.

Therefore, a first object of the present invention is a biocidal and dispersing composition including from 0.1 % in weight to 20% in weight of limonene, from 0.1% in weight to 43% in weight of a first biocidal compound of the general formula R-N(CH₃)₃⁺Cl⁻ wherein R is a saturated or unsaturated, linear or branched alkyl having from 14 to 18 carbon atoms, from 0.1% in weight to 30.0% in weight of at least one second biocidal compound and from 30% in weight to 95% in weight of a aqueous solvent.

Preferably, the biocidal and dispersing composition of the present invention includes from 10% in weight to 20% in weight of limonene, from 30% in weight to 43% in weight of a biocide of the general formula R-N(CH₃)₃⁺Cl⁻ wherein R is a saturated or unsaturated, linear or branched alkyl having from 14 to 18 carbon atoms, from 5% in weight to 25% in weight of at least one second biocide and from 30% in weight to 60% in weight of an aqueous solvent.

Advantageously, the limonene in the composition of the invention is selected from the group consisting of L-limonene, D-limonene and mixtures thereof. Even more advantageously, said limonene is D-limonene.

Preferably, the R group of the first biocidal compound of general formula R-N(CH₃)₃⁺Cl⁻ is a saturated or unsaturated, linear or branched alkyl having from 14 to 16 carbon atoms. Even more preferably, the first biocidal compound is a mixture of compounds of the general formula R-N(CH₃)₃⁺Cl⁻ having an aliphatic group R from 14 to 16 carbon atoms.

Preferably, the group R of the first biocidal compound of the general formula R-N(CH₃)₃⁺Cl⁻ is a mixture including a saturated fatty acid such as, for instance, palmitic acid, stearic acid, myristic acid and mixtures thereof, a monounsaturated fatty acid such as, for instance, oleic acid, palmitoleic acid and mixtures thereof and a polyunsaturated fatty acid such as, for instance, linoleic acid, linolenic acid and mixtures thereof.

Advantageously, said second biocidal compound present in the composition of the present invention is selected from the group consisting of 2-bromo-2-nitro-propane-1,3-diol (bronopol), benzyl-C₁₂-C₁₈-alkyldimethyl chloride quaternary ammonium, benzyl-C₈-C₁₈-alkyldimethyl chloride quaternary ammonium, a mixture of 5-chloro-2-methyl-2H-isothiazol-3-one and 2-methyl-2H-isothiazol-3-one and mixtures thereof.

Preferably, the solvent of the composition of the invention is water alone.

The aqueous solvent of the composition of the invention may also be a mixture of water with a low molecular weight aliphatic alcohol having from 1 to 4 carbon atoms. Said solvent is preferably a mixture of water and 2-propanol.

In a first embodiment, the composition of the present invention includes from 8 to 12% in weight of d-limonene, from 15 to 19% in weight of a mixture of compounds of the general formula R-N(CH₃)₃⁺Cl⁻ having a C₁₄-C₁₆ aliphatic group, from 6 to 10% in weight of benzyl-C₁₂-C₁₈-alkyldimethyl chloride quaternary ammonium and from 63 to 67% in weight of water.

In a second embodiment of the present invention, the composition includes from 9 to 13% in weight of d-limonene, from 5 to 9% in weight of a mixture of compounds of the general formula R-N(CH₃)₃⁺Cl⁻ having a C₁₄-C₁₆ aliphatic group R, from 6 to 10% in weight of benzyl-C₈-C₁₈-alkyldimethyl chloride quaternary ammonium and from 5 to 9% in weight of bronopol and from 65 to 69% in weight of water.

In a third embodiment, the composition of the present invention includes from 8 to 12% in weight of d-limonene, from 5 to 9% in weight of a mixture of compounds of the general formula R-N(CH₃)₃⁺Cl⁻ having a C₁₄-C₁₆ aliphatic group R, from 7 to 11% in weight of benzyl-C₈-C₁₈-alkyldimethyl chloride quaternary ammonium, from 3 to 7% in weight of bronopol, from 5 to 9% in weight of a mixture of 5-chloro-2-methyl-2H-isothiazol-3-one and 2-methyl-2H-isothiazol-3-one in a weight ratio of 3:1 and from 60 to 64% in weight of water.

In a fourth embodiment of the present invention, the composition includes from 10 to 14% in weight of d-limonene, from 6 to 10% in weight of a mixture of compounds of the general formula R-N(CH₃)₃⁺Cl⁻ having a C₁₄-C₁₆ aliphatic group R, from 7 to 11% in weight of benzyl-C₈-C₁₈-alkyldimethyl chloride quaternary ammonium, from 8.5 to 12.5% in weight of a mixture of 5-chloro-2-methyl-2H-isothiazol-3-one and 2-methyl-2H-isothiazol-3-one in a weight ratio of 3:1 and from 58.5 to 62.5% in weight of water.

A further object of the present invention is a method for controlling the biological contamination and the formation of sticky deposits in the waters of a system for the production of paper and/or of the wood pulp, characterised in that said method includes the step of adding the biocidal and dispersing composition of the present invention as disclosed above in at least one damp area of said system.

Preferably, said waters are paper mill waters and/or waters for the production of wood pulp of said system.

Advantageously, in a system for the production of wood pulp, said damp area is the stocking chest at the end of the bleaching step.

Advantageously, in a system for the production of paper, said damp area is selected from the group consisting of the mixing chest, the machine chest, the headbox, the damper of the headbox, the silo or storm water tower, the chest for the clarified waters, the feeding piping to the flotation units and the piping exiting the flotation units, the chest for intermediate waters, the fan pump, the constant level tray and the gutters of the underscreen of said system.

Even more preferably, in a system for the production of paper, said damp area is the headbox of said system.

Preferably, the biocidal and dispersing composition of the present invention is added in at least one damp area of a system for the production of paper and/or of wood pulp in an amount from 1 to 15000 ppm with respect to the dry wood pulp. Even more preferably, said biocidal and dispersing composition is added in said damp area in an amount between 500 and 1500 ppm with respect to the dry wood pulp.

In the present disclosure and in the appended claims, the term "biological contamination" indicates the contamination of paper mill waters and waters for the production of wood pulp due to the presence of biological substances such as, for instance, aerobic bacteria, moulds, yeasts, anaerobic bacteria, specifically sulphate reducing anaerobic bacteria such as, for instance, Enterobacteriaceae and E.coli.

In the present disclosure and in the appended claims, the term "biocidal composition" indicates a composition allowing to control the biological contamination defined above.

In the present disclosure and in the appended claims, the expression "formation of sticky deposits" or "formation of sticky materials" indicates the formation in paper mill waters and/or in waters for the production of wood pulp of compounds such as pitches, waxes, pastes and of any organic and inorganic deposit in the biological silt of said waters.

In the present disclosure and in the appended claims, the term "dispersing composition" indicates a composition allowing to control the formation of sticky materials defined above.

In the present disclosure and in the appended claims, the term "damp area" indicates an area of a system for the production of paper and/or for the production of wood pulp containing water.

Specifically, such damp areas may be present in said system in the steps of debarking, defibering and bleaching disclosed above with reference to a traditional system for the production of wood pulp.

Instead, specific examples of such damp areas in a system for the production of paper consist of the mixing chest, the machine chest, the headbox, the damper of the headbox, the silo or storm water tower, the chest for the clarified waters, the feeding piping to the flotation units and the piping exiting the flotation units, the chest for intermediate waters, the fan pump, the constant level tray and the gutters of the underscreen of said system.

In the present disclosure and in the appended claims, the term "aqueous" indicates that the solvent in the composition of the present invention may contain 100% in weight of water or the solvent is a hydroalcoholic mixture containing from 0.1 to 20% in weight of a low molecular weight aliphatic alcohol having from 1 to 4 carbon atoms.

In the present disclosure and in the appended claims, all percentages are intended as percentages in weight (% w/w) unless stated otherwise.

The advantages of the composition of the present invention are apparent from what set forth above.

A first advantage is that the presence of a biocide belonging to the family of ammonium alkyl derivatives of the general formula R-N(CH₃)₃⁺Cl⁻ wherein R is a saturated or unsaturated, linear or branched alkyl having from 14 to 18 carbon atoms in the composition of the present invention allows to obtain a stable aqueous composition containing limonene and more than one biocide displaying both biocidal properties and dispersing properties for the deposits present in paper mill waters and/or in waters for the production of wood pulp.

A second advantage is that the presence of a biocide belonging to the family of ammonium alkyl derivatives of the general formula R-N(CH₃)₃⁺Cl⁻ wherein R is a saturated or unsaturated, linear or branched alkyl having from 14 to 18 carbon atoms in the composition of the present invention allows to control the biological contamination due to aerobic bacteria, moulds, yeasts, anaerobic bacteria, specifically sulphate reducing bacteria, due to Enterobacteriaceae and E.coli and at the same time to also control the formation of sticky materials such as pitches, waxes, pastes and of any organic and inorganic deposit present in the biological silt of paper mill waters and/or waters for the production of wood pulp.

A third advantage is that the combined presence of limonene and more than one biocidal compound allows to eliminate bad odours present in the waters of systems for the production of paper and/or for the production of wood pulp.

A fourth advantage is that the presence of an aqueous solvent in the composition of the present invention makes this composition compatible with the waters present in circuits of systems for the production of paper and/or systems for the production of wood pulp.

A fifth advantage is that the composition of the present invention is biodegradable.

A sixth advantage is that the presence of limonene leads the composition of the present invention to have a disruptive effect on the biofilms formed by polysaccharides produced by bacteria present in the waters of the systems for the production of paper and/or of the systems for the production of wood pulp.

A further advantage is that the composition of the present invention may be simply added in one or more damp areas of the system for the production of paper and/or wood pulp.

The following examples are intended to disclose the present invention by no way of limitation.

In all of the following assays, the evaluations of the biocidal effectiveness have been performed according to traditional methods by directly sampling the water of the system and by carrying out measurements in situ.

The microbiological monitoring has been carried out by plating the samples to be tested on the surfaces of culture media selecting the single microbiological families prepared on plates. Specifically, colourless Agar has been used for aerobic bacteria, Rose Bengal for moulds and yeasts, iron sulphate nutrient media for sulphate reducing anaerobic bacteria, glucose- and lactose-modified VRB Agar for Enterobacteriaceae and beta-glucoronidase for E.coli.

Furthermore, the total microbiological contamination has been determined by bioluminescence. This method is based on the use of specific sticks containing an enzyme (luciferin-luciferase) capable of reacting with ATP (present in all living organisms) thus generating bioluminescence. The amount of bioluminescence produced is proportional to the amount of ATP and therefore to the total microbiological contamination of the system. The bioluminescence has been analysed by means of the Hylite 2 photometer (Merck), which converts the emission generated by the reaction into a numerical value.

The method used hereinafter for the evaluation of the dispersing effectiveness on pitches was instead based on the direct laboratory evaluation of the effect of the compositions of the invention on samples of contaminants as follows. A sample of slurry was collected from the machine chest of a system for the production of paper (with a consistency between 3 and 5%) and was diluted with network water until a consistency of 0.5% was achieved. Pitch samples were collected from the scrapers of the dryer section (or from the scrapers of the Yankee cylinder for the production of tissue paper). A 14% solution of these plasticized pitch samples was prepared by using a stirrer and a heating plate. The slurry sample from the machine chest of the system, which was diluted and heated to 40°C, was placed in a Pyrex beaker, the walls of which had been coated by a 3 cm-wide strip of Melinex S (a polyester) and the whole was placed under stirring. After 10 seconds, 1 ml of the 14% solution of pitches (as prepared above) was added to the above said sample of slurry from the machine chest and the whole was left stirring for 15 minutes. After this time had passed, the beaker was emptied and the strip of Melinex S, especially similar to pitches, was evaluated by counting the amount of contaminants adhering thereto (blank).

The test was repeated by adding the compositions of the invention to be tested before dosing the 14% solution of pitches.

The good effectiveness of the compositions of the invention was evaluated from the decrease of the amount of pitches which adhere to the film of Melinex S with respect to the test without the compositions of the invention (blank).

**Example 1**

| **Composition 1 according to the invention** | |
|---|---|
| Component | % in weight |
| Water | 65 |
| Mixture of compounds of the general formula R-N(CH₃)₃⁺Cl⁻ having a C₁₄-C₁₆ aliphatic group R in 2-propanol | 17 |
| Mixture of compounds ofbenzyl-C₁₂-C₁₈-alkyldimethyl chloride quaternary ammonium | 8 |
| d-Limonene | 10 |

The above said composition 1 according to the invention was prepared by mixing the components in the sequence shown in the Table above taking care to introduce the components while stirring. To obtain a stable solution, the raw materials must be added in the indicated sequence. The mixing was carried out at room temperature (from 10 to 25°C).

The above said composition 1 was clear and displayed a light yellow colour.

The test to evaluate the biocidal and dispersing effectiveness of the composition 1 according to the invention was performed by using as a sample a slurry collected from the machine chest of a paper mill of the North of Italy that used waste paper as raw material and produced paperboard intended for the production of the corrugated part of cardboard (Fluting). The above said paper mill reported the formation of black pitches at the level of the scrapers of the dryer section.

The results of the above said tests are shown hereinafter in Table 1.

**Table 1**

| **Biocidal effectiveness** | | | | |
|---|---|---|---|---|
| | **Total aerobic bacteria Cfu/ml** | **Moulds Cfu/ml** | **Sulphate reducing anaerobic bacteria Cfu/ml** | **Bioluminescence (RLU)** |
| **Machine chest** | | | | |
| **Blank** | 10⁷ | 10⁵ | 10⁴ | 95000 |

| **30 minutes** | | | | |
|---|---|---|---|---|
| **Composition 1** | | | | |
| 25 ppm | 10⁵ | 10⁵ | 10³ | 65300 |
| 50 ppm | 5 x 10⁴ | 10⁴ | <10² | 38000 |
| 100 ppm | 5 x 10³ | 10⁴ | <10² | 34000 |
| 200 ppm | 10³ | 10² | <10² | 16800 |

| **2 hours** | | | | |
|---|---|---|---|---|
| 25 ppm | 10⁵ | 10⁵ | 10³ | 64200 |
| 50 ppm | 5 x 10⁴ | 10⁴ | <10² | 28000 |
| 100 ppm | 10³ | 10² | <10² | 12000 |
| 200 ppm | <10² | <10² | <10² | 5900 |

**Table 1a**

| **Dispersing effectiveness of pitches** | | | |
|---|---|---|---|
| Test | Dose (ppm) | No. of pitches | % reduction |
| 1 | 0 | 723 | 0 |
| 2 | 200 | 357 | 50.6 |
| 3 | 400 | 239 | 66.9 |

**Example 2**

| **Composition 2 according to the invention** | |
|---|---|
| Component | % in weight |
| Water | 67 |
| Mixture of compounds of the general formula R-N(CH₃)₃⁺Cl⁻ having a C₁₄-C₁₆ aliphatic group R in 2-propanol | 7 |
| Mixture of compounds of benzyl-C₈-C₁₈-alkyldimethyl chloride quaternary ammonium | 8 |
| Bronopol | 7 |
| d-Limonene | 11 |

The above said composition 2 according to the invention was prepared in a manner similar to that disclosed in the previous Example 1.

The above said composition 2 was clear and displayed a light yellow colour.

The test to evaluate the biocidal and dispersing effectiveness of the composition 2 according to the invention was performed by using as a sample a slurry collected from the machine chest of a paper mill of the central-northern part of Italy that used waste paper as raw material and produced packaging paperboard (brown packaging). The above said paper mill reported the formation of black pitches at the level of the scrapers of the dryer section. This determined the weekly stop of the continuous machine for the cylinder cleaning.

The results of the above said tests are shown hereinafter in Table 2.

**Table 2**

| **Biocidal effectiveness** | | | | |
|---|---|---|---|---|
| | **Total aerobic bacteria Cfu/ml** | **Moulds Cfu/ml** | **Sulphate reducing anaerobic bacteria Cfu/ml** | **Bioluminescence (RLU)** |
| **Machine chest** | | | | |
| **Blank** | 10⁷ | 10³ | 10⁵ | >99999 |

| **30 minutes** | | | | |
|---|---|---|---|---|
| **Composition 2** | | | | |
| 25 ppm | 10⁷ | 0 | 10³ | 78000 |
| 50 ppm | 5 x 10⁵ | <10² | <10² | 47000 |
| 100 ppm | 5 x 10⁵ | <10² | <10² | 38000 |
| 200 ppm | 10⁴ | <10² | <10² | 27000 |

| **2 hours** | | | | |
|---|---|---|---|---|
| 25 ppm | 10⁷ | <10² | 10³ | 65000 |
| 50 ppm | 5 x 10⁵ | <10² | <10² | 42700 |
| 100 ppm | 10⁵ | <10² | <10² | 34800 |
| 200 ppm | 10⁴ | <10² | <10² | 22800 |

**Table 2a**

| **Dispersing effectiveness of pitches** | | | |
|---|---|---|---|
| Test | Dose (ppm) | No. of pitches | % reduction |
| 1 | 0 | 520 | 0 |
| 2 | 300 | 311 | 40.2 |
| 3 | 400 | 195 | 62.5 |

**Example 3**

| **Composition 3 according to the invention** | |
|---|---|
| Component | % in weight |
| Water | 62 |
| Mixture of compounds of the general formula R-N(CH₃)₃⁺Cl⁻ having a C₁₄-C₁₆ aliphatic group R in 2-propanol | 7 |
| Mixture of compounds of benzyl-C₈-C₁₈-alkyldimethyl chloride quaternary ammonium | 9 |
| Bronopol | 5 |
| Mixture of: 5-chloro-2-methyl-2H-isothiazol-3-one and 2-methyl-2H-isothiazol-3-one (3:1) stabilized with magnesium chloride | 7 |
| d-Limonene | 10 |

The above said composition 3 according to the invention was prepared in a manner similar to that disclosed in the previous Example 1.

The above said composition 3 was clear and colourless.

The test to evaluate the biocidal and dispersing effectiveness of the composition 3 according to the invention was performed by using as a sample a slurry collected from the headbox of a paper mill of the North of Italy that used white waste paper as raw material and produced tissue paper.

The client reported the presence of pitches at the level of the scrapers of the Yankee cylinder.

The results of the above said tests are shown hereinafter in Table 3.

**Table 3**

| **Biocidal effectiveness** | | | | |
|---|---|---|---|---|
| | **Total aerobic bacteria Cfu/ml** | **Moulds Cfu/ml** | **Sulphate reducing anaerobic bacteria Cfu/ml** | **Bioluminescence (RLU)** |
| **Headbox** | | | | |
| **Blank** | 10⁷ | 10³ | 10⁵ | >99999 |

| **30 minutes** | | | | |
|---|---|---|---|---|
| **Composition 3** | | | | |
| 25 ppm | 10⁴ | 10² | <10² | 24000 |
| 50 ppm | <10² | <10² | <10² | 14000 |
| 100 ppm | <10² | <10² | <10² | 7600 |
| 200 ppm | <10² | <10² | <10² | 2200 |

| **2 hours** | | | | |
|---|---|---|---|---|
| 25 ppm | 10⁴ | 10² | <10² | 12000 |
| 50 ppm | <10² | <10² | <10² | 7800 |
| 100 ppm | <10² | <10² | <10² | 4700 |
| 200 ppm | <10² | <10² | <10² | 4500 |

**Table 3 a**

| **Dispersing effectiveness of pitches** | | | |
|---|---|---|---|
| Test | Dose (ppm) | No. of pitches | % reduction |
| 1 | 0 | 75 | 0 |
| 2 | 200 | 26 | 65.3 |
| 3 | 400 | 11 | 85.3 |

**Example 4**

| **Composition 4 according to the invention** | |
|---|---|
| Component | % in weight |
| Water | 60.5 |
| Mixture of compounds of the general formula R-N(CH₃)₃⁺Cl⁻ having a C₁₄-C₁₆ aliphatic group R in 2-propanol | 8 |
| Mixture of compounds of benzyl-C₈-C₁₈-alkyldimethyl chloride quaternary ammonium | 9 |
| Mixture of: 5-chloro-2-methyl-2H-isothiazol-3-one and 2-methyl-2H-isothiazol-3-one (3:1) stabilized with magnesium chloride | 10.5 |
| d-Limonene | 12 |

The above said composition 4 according to the invention was prepared in a manner similar to that disclosed in the previous Example 1.

The above said composition 4 was clear and displayed a yellow colour.

The test to evaluate the biocidal and dispersing effectiveness of the composition 4 according to the invention was performed by using as a sample a slurry collected from the machine chest of a paper mill in the North of Italy that used waste paper as raw material and produced multilayer paperboard. In this paper mill, the machine chest had a bad odour and pitches were present at the level of the scrapers of the dryer section.

The results of the above said tests are shown hereinafter in Table 4.

**Table 4**

| **Biocidal effectiveness** | | | | |
|---|---|---|---|---|
| | **Total aerobic bacteria Cfu/ml** | **Moulds Cfu/ml** | **Sulphate reducing anaerobic bacteria Cfu/ml** | **Bioluminescence (RLU)** |
| **Headbox** | | | | |
| **Blank** | <10⁷ | 10⁵ | <10⁷ | >99999 |

| **30 minutes** | | | | |
|---|---|---|---|---|
| **Composition 4** | | | | |
| 25 ppm | 10⁷ | 10⁴ | <10⁵ | 88200 |
| 50 ppm | 5 x 10⁵ | 10⁴ | 10⁴ | 60700 |
| 100 ppm | 5 x 10⁴ | 10² | 10² | 33400 |
| 200 ppm | 10³ | <10² | 10² | 19900 |

| **2 hours** | | | | |
|---|---|---|---|---|
| 25 ppm | 10⁷ | 10⁴ | 10⁴ | 82000 |
| 50 ppm | 10⁵ | 10⁴ | <10² | 51000 |
| 100 ppm | 10⁴ | <10² | <10² | 22000 |
| 200 ppm | 10² | <10² | <10² | 13000 |

**Table 4 a**

| **Dispersing effectiveness of pitches** | | | |
|---|---|---|---|
| Test | Dose (ppm) | No. of pitches | % reduction |
| 1 | 0 | 599 | 0 |
| 2 | 200 | 269 | 55.1 |
| 3 | 400 | 87 | 85.5 |

## Claims

1. A biocidal and dispersing composition including from 0.1% in weight to 20% in weight of limonene, from 0.1% in weight to 43% in weight of a first biocidal compound of the general formula R-N(CH₃)₃⁺Cl⁻ wherein R is a saturated or unsaturated, linear or branched alkyl having from 14 to 18 carbon atoms, from 0.1% in weight to 30.0% in weight of at least one second biocidal compound and from 30% in weight to 95% in weight of an aqueous solvent.

2. A biocidal and dispersing composition according to claim 1, including from 10% in weight to 20% in weight of limonene, from 30% in weight to 43% in weight of a biocide of the general formula R-N(CH₃)₃⁺Cl⁻ wherein R is a saturated or unsaturated, linear or branched alkyl having from 14 to 18 carbon atoms, from 5% in weight to 25% in weight of at least one second biocide and from 30% in weight to 60% in weight of aqueous solvent.

3. A biocidal and dispersing composition according to claim 1 or 2, wherein limonene is selected from the group consisting of L-limonene, D-limonene and mixtures thereof.

4. A biocidal and dispersing composition according to claim 3, wherein limonene is D-limonene.

5. A biocidal and dispersing composition according to any one of the claims from 1 to 4, wherein the group R of said first biocidal compound of the general formula R-N(CH₃)₃⁺Cl⁻ is a saturated or unsaturated, linear or branched alkyl from 14 to 16 carbon atoms.

6. A biocidal and dispersing composition according to claim 5, wherein said first biocidal compound is a mixture of compounds of the general formula R-N(CH₃)₃⁺Cl⁻ having an aliphatic group R from 14 to 16 carbon atoms.

7. A biocidal and dispersing composition according to any one of the claims from 1 to 6, wherein said second biocidal compound is selected from the group consisting of 2-bromo-2-nitro-propane-1,3-diol (bronopol), benzyl-C₁₂-C₁₈-alkyldimethyl chloride quaternary ammonium, benzyl-C₈-C₁₈-alkyldimethyl chloride quaternary ammonium, a mixture of 5-chloro-2-methyl-2H-isothiazol-3-one and 2-methyl-2H-isothiazol-3-one and mixtures thereof.

8. A biocidal and dispersing composition according to any one of the claims from 1 to 7, wherein said solvent is water alone.

9. A biocidal and dispersing composition according to any one of the claims from 1 to 7, wherein said aqueous solvent is a mixture of water and a low molecular weight aliphatic alcohol having from 1 to 4 carbon atoms.

10. A biocidal and dispersing composition according to claim 9, wherein said solvent is a mixture of water and 2-propanol.

11. A biocidal and dispersing composition including from 8 to 12 % in weight of d-limonene, from 15 to 19% in weight of a mixture of compounds of the general formula R-N(CH₃)₃⁺Cl⁻ having a C₁₄-C₁₆ aliphatic group R, from 6 to 10% in weight ofbenzyl-C₁₂-C₁₈-alkyldimetil chloride quaternary ammonium and from 63 to 67% in weight of water.

12. A biocidal and dispersing composition including from 9 to 13% in weight of d-limonene, from 5 to 9% in weight of a mixture of compounds of the general formula R-N(CH₃)₃⁺Cl⁻ having a C₁₄-C₁₆ aliphatic group R, from 6 to 10% in weight of benzyl-C₈-C₁₈-alkyldimethyl chloride quaternary ammonium, from 5 to 9% in weight of bronopol and from 65 to 69% in weight of water.

13. A biocidal and dispersing composition including from 8 to 12% in weight of d-limonene, from 5 to 9% in weight of a mixture of compounds of the general formula R-N(CH₃)₃⁺Cl⁻ having a C₁₄-C₁₆ aliphatic group R, from 7 to 11% in weight of benzyl-C₈-C₁₈-alkyldimethyl chloride quaternary ammonium, from 3 to 7% in weight of bronopol, from 5 to 9% in weight of a mixture of 5-chloro-2-methyl-2H-isothiazol-3-one and 2-methyl-2H-isothiazol-3-one in a weight ratio of 3:1 and from 60 to 64% in weight of water.

14. A biocidal and dispersing composition including from 10 to 14% in weight of d-limonene, from 6 to 10% in weight of a mixture of compounds of the general formula R-N(CH₃)₃⁺Cl⁻ having a C₁₄-C₁₆ aliphatic group R, from 7 to 11% in weight of benzyl-C₈-C₁₈-alkyldimethyl chloride quaternary ammonium, from 8.5 to 12.5% in weight of a mixture of 5-chloro-2-methyl-2H-isothiazol-3-one and 2-methyl-2H-isothiazol-3-one in a weight ratio of 3:1 and from 58.5 to 62.5% in weight of water.

15. A method for controlling the biological contamination and the formation of sticky deposits in the waters of a system for the production of paper and/or of the wood pulp, **characterised in that** said method includes the step of adding a biocidal and dispersing composition according to claims 1 to 14 in at least one damp area of said system.

16. A method according to claim 15, wherein said waters are paper mill waters and/or waters for the production of wood pulp of said system.

17. A method according to claim 15, wherein in a system for the production of wood pulp, said damp area is the stocking chest at the end of the bleaching step.

18. A method according to claim 15, wherein in a system for the production of paper, said damp area is selected from the group consisting of the mixing chest, the machine chest, the headbox, the damper of the headbox, the silo or storm water tower, the chest for the clarified waters, the feeding piping to the flotation units and the piping exiting the flotation units, the chest for intermediate waters, the fan pump, the constant level tray and the gutters of the underscreen of said system.

19. A method according to claim 18, wherein in a system for the production of paper, said damp area is the headbox of said system.
